# EUROPÄISCHE PATENTSCHRIFT

(11) **EP 2 373 527 B1**
(45) Veröffentlichungstag und Bekanntmachung des Hinweises auf die Patenterteilung: **22.06.2016**
(21) Anmeldenummer: 09796689.9
(22) Anmeldetag: 15.12.2009
(51) Int. Cl.: B60T 11/16, B60T 11/20, B60T 11/236

(54) **HAUPTZYLINDER**
MASTER CYLINDER
MAÎTRE-CYLINDRE

(30) Priorität: 16.12.2008 DE 102008063241
(43) Veröffentlichungstag der Anmeldung: 12.10.2011
(73) Patentinhaber: Gustav Magenwirth GmbH & Co. KG, 72574 Bad Urach (DE)
(72) Erfinder: RUOPP, Michael, 89180 Berghülen (DE); NENNING, Bernd, 89335 Ichenhausen (DE)
(74) Vertreter: Hoeger, Stellrecht & Partner Patentanwälte mbB
(86) Internationale Anmeldenummer: PCT/EP2009/067205
(87) Internationale Veröffentlichungsnummer: WO 2010/076197

(56) Entgegenhaltungen:
- EP-A1- 1 616 768
- EP-A1- 1 767 423
- EP-A1- 1 995 138
- EP-A2- 1 801 423
- DE-A1- 19 754 700
- FR-A1- 2 869 381
- US-A1- 2006 064 978

## Beschreibung

Die Erfindung betrifft einen Hauptzylinder, insbesondere für ein Kupplungs-, Betätigungs- oder Bremssystem eines Fahrzeugs, umfassend ein Zylindergehäuse mit einer Kolbenbohrung, einen in der Kolbenbohrung angeordneten Kolben mit einer einer Zylinderkammer zugewandten Stirnseite und mit mindestens einer im Abstand von der Stirnseite von einer Kolbenmantelfläche durch eine Kolbenwand zu der Zylinderkammer führenden Nachlauföffnung, die in einer Druckausgleichsstellung des Kolbens an einen Nachlaufraum angrenzen, so dass in der Druckausgleichsstellung Hydraulikmedium zum Druckausgleich in die Zylinderkammer nachlaufen kann, und ein zwischen dem Gehäuse und dem Kolben im Bereich der Kolbenbohrung angeordnetes und die Zylinderkammer begrenzendes inneres Dichtelement.

Aus den EP 1 616 768 A1 und DE 10 2004 055 410 A1 sind derartige Hauptzylinder bekannt. Bei diesen Hauptzylindern besteht das Problem, den auftretenden Leerhub möglichst klein zu machen. Der Leerhub ist der Hub, der erforderlich ist, um ausgehend von der Druckausgleichsstellung einen Druck in der Zylinderkammer aufbauen zu können.

Diese Aufgabe wird bei einem Hauptzylinder der eingangs beschriebenen Art erfindungsgemäß dadurch gelöst, dass der Nachlaufraum zwischen dem Dichtelement und der Kolbenmantelfläche auf einer der Zylinderkammer abgewandten Seite einer Dichtlippe des Dichtelements angeordnet ist und dass die Nachlauföffnung in der Druckausgleichstellung einer den Nachlaufraum begrenzenden Innenfläche des Dichtelements gegenüberliegend angeordnet ist.

Der Vorteil der erfindungsgemäßen Lösung ist darin zu sehen, dass durch die Verlegung des Nachlaufraums in einen Bereich zwischen dem Dichtelement und der Kolbenmantelfläche die Möglichkeit besteht, die mindestens eine Nachlauföffnung in der Druckausgleichstellung so zu positionieren, dass diese bereits bei einer geringen Hubbewegung des Kolbens unter der an der Kolbenmantelfläche dichtend anliegenden Dichtlippe hindurchläuft und somit ein Druckaufbau in der Zylinderkammer erfolgen kann.

Damit ist gemäß der eingangs beschriebenen Aufgabe der Leerhub minimiert.

Besonders günstig ist es hierbei, wenn das Dichtelement zur Bildung des Nachlaufraums im Abstand von der Kolbenmantelfläche verlaufende Innenflächenbereiche aufweist.

Derartige im Abstand von der Kolbenmantelfläche verlaufende Innenflächenbereiche schaffen die Möglichkeit, ein ausreichend großes Volumen für den Nachlaufraum zu schaffen.

Eine vorteilhafte Lösung sieht dabei vor, dass die Innenflächenbereiche eine um die Kolbenmantelfläche umlaufende Eintiefung bilden, die beispielsweise als Ringnut in das Dichtelement eingearbeitet sein kann.

Eine derartige Eintiefung schafft die Möglichkeit, mit einer Vielzahl von Nachlauföffnungen im Kolben zu korrespondieren, so dass ein ausreichend großer Nachlaufquerschnitt zur Verfügung gestellt werden kann.

Eine andere vorteilhafte Lösung sieht vor, dass die Innenflächenbereiche zu einer der Zylinderkammer abgewandten Seite des Dichtelements führende Überströmkanäle bilden. Derartige Überströmkanäle schaffen die Möglichkeit, nicht nur dem Nachlaufraum ein möglichst großes Volumen zur Verfügung zu stellen, sondern auch für das Nachlaufen des Hydraulikmediums einen ausreichend großen Strömungsquerschnitt zur Verfügung zu stellen.

Die Überströmkanäle könnten dabei beispielsweise spiralförmig oder wendelförmig in dem Dichtelement verlaufen.

Eine besonders günstige Lösung sieht jedoch vor, dass die Überströmkanäle ungefähr parallel zu einer Bewegungsrichtung des Kolbens verlaufen.

Um einerseits die Zufuhr von Hydraulikmedium zum Nachlaufraum sicherzustellen und um andererseits eine sichere Abfuhr von Luftblasen aus dem Nachlaufraum zu erreichen, ist vorgesehen, dass der Nachlaufraum sich an mindestens eine Zufuhrausnehmung anschließt, über welche Hydraulikmedium dem Nachlaufraum zuführbar ist und über welche auch Luftblasen aus dem Nachlaufraum austreten können.

Insbesondere ist dabei vorgesehen, dass die Zufuhrausnehmung in Richtung zum Nachlaufraum hin in radialer Richtung variiert.

Insbesondere ist ein Zufluss von Hydraulikmedium zum Nachlaufraum dann günstig realisierbar, wenn die Zufuhrausnehmung mit einem Zufuhrkanal in Verbindung steht.

Besonders günstig ist es, wenn der Nachlaufraum sich an einen zwischen der Kolbenmantelfläche und der Kolbenbohrung liegenden Zufuhrspalt anschließt, über welchen das Hydraulikmedium in den Nachlaufraum nachströmen kann.

Der Zufuhrspalt kann dabei zylindrisch ausgebildet sein. Besonders günstig ist es, wenn der Zufuhrspalt sich in Richtung zum Nachlaufraum hin in radialer Richtung erweitert.

Eine besonders einfache Lösung sieht vor, dass sich der Zufuhrspalt konisch erweitert.

Der Zufuhrspalt kann sich dabei mit einem Winkel zwischen 0,5° und 45° in Richtung des Nachlaufraums erweitern. Besonders günstig ist es, wenn der Winkel im Bereich von 1° bis 8° liegt.

Der Zufuhrspalt hat vorzugsweise eine radiale Ausdehnung im Bereich von 0,01 mm und 0,5 mm.

Ferner hat der Zufuhrspalt vorzugsweise eine parallel zu einer Bewegungsrichtung des Kolbens verlaufende Spaltlänge von 0,1 mm bis 10 mm.

Alternativ zum Vorsehen eines Zufuhrspalts besteht die Möglichkeit, mindestens einen Zufuhrabschnitt in einem Wandbereich zwischen dem Nachlaufraum und dem Zufuhrkanal oder einem Hydraulikraum vorzusehen.

Bevorzugt werden mehrere im Abstand voneinander angeordnete Zufuhrausschnitte in dem Wandbereich vorgesehen.

Insbesondere ist der mindestens eine Zufuhrabschnitt so dimensioniert, dass dieser mit zunehmender Erstreckung in Richtung des Nachlaufraums eine zunehmend geringer werdende radial Ausdehnung aufweist, so dass auf Seiten des Nachlaufraums ein möglichst geringer Spalt zur Kolbenmantelfläche besteht.

Dabei bilden die Überströmkanäle insbesondere eine Verbindung zwischen der Eintiefung und der Zufuhrausnehmung.

Besonders günstig lässt sich das Hydraulikmedium dem Zufuhrspalt zuführen, wenn dieser mit einem Zufuhrkanal in Verbindung steht, wobei der Zufuhrkanal beispielsweise auf einer dem Dichtelement gegenüberliegenden Seite der Zufuhrausnehmung angeordnet ist und vorzugsweise mit einer der Kolbenmantelfläche zugewandten Zufuhröffnung in die Kolbenbohrung mündet. Hinsichtlich der Ausbildung des Dichtelements selbst wurden bislang keine näheren Angaben gemacht.

So sieht eine vorteilhafte Lösung vor, dass das Dichtelement einen ringförmigen Basiskörper aufweist.

Ferner ist vorzugsweise das Dichtelement so ausgebildet, dass sich von dem ringförmigen Basiskörper eine radial außen liegende Stützlippe in Richtung der Zylinderkammer erstreckt.

Ferner erfolgt vorzugsweise die Abdichtung gegenüber der Kolbenmantelfläche dadurch, dass von dem Basiskörper ausgehend sich in Richtung der Zylinderkammer eine radial innenliegende Dichtlippe erstreckt, welche an der Kolbenmantelfläche anliegt.

Zum Erreichen einer guten Abdichtung ist die radial innenliegende Dichtlippe vorzugsweise flexibel ausgebildet.

Vorzugsweise ist dabei die Dichtlippe so ausgebildet, dass sie radial nach innen mit Vorspannung an der Kolbenmantelfläche anliegt.

Hinsichtlich der Anordnung des Nachlaufraums bei einem derart ausgebildeten Dichtelement wurden bislang keine näheren Angaben gemacht.

Besonders vorteilhaft ist es hierbei, wenn der zwischen dem Dichtelement und der Kolbenfläche angeordnete Nachlaufraum sich im Bereich des Basiskörpers des Dichtelements erstreckt.

Ferner ist es günstig, wenn sich der Nachlaufraum bis zur Dichtlippe erstreckt.

Ferner wurde im Zusammenhang mit der Dichtlippe lediglich deren Abdichtfunktion relativ zur Kolbenmantelfläche erwähnt.

Um im Fall extremen Unterdrucks in der Zylinderkammer ein schnelles Nachströmen von Hydraulikmedium aus dem Nachlaufraum in die Zylinderkammer zu ermöglichen, ist vorzugsweise vorgesehen, dass die Dichtlippe eine derartige Vorspannung hat, dass diese bei einem Unterdruck in der Zylinderkammer ein Durchströmen von Hydraulikmedium von dem Nachlaufraum zur Zylinderkammer durch zumindest partielles Abheben von der Kolbenmantelfläche zulässt.

Insbesondere ist der Kolben so ausgebildet, dass er eine zu einer Mittelachse zylindrische Kolbenmantelfläche aufweist, die sich mit konstantem Querschnitt über den gesamten, in allen Kolbenstellungen von der Dichtung berührbaren Bereich des Kolbens erstreckt.

Hinsichtlich der einzelnen Stellungen des Kolbens wurden bislang keine näheren Angaben gemacht.

So sieht eine vorteilhafte Lösung vor, dass der Kolben in einer Verschlussstellung mit den Nachlauföffnungen so weit von der Druckausgleichstellung weg positioniert ist, dass die Nachlauföffnungen von der Dichtfläche der inneren Dichtlippe abgedeckt sind und somit kein Druckausgleich mehr zwischen der Zylinderkammer und dem Nachlaufraum erfolgen kann.

Ferner ist vorteilhafterweise vorgesehen, dass der Kolben in einer Druckstellung so weit in Richtung der Zylinderkammer verschoben ist, dass die mindestens eine Nachlauföffnung auf einer der Zylinderkammer zugewandten Seite der Dichtlippe steht, so dass damit über die Nachlauföffnung keinerlei Druckausgleich mehr erfolgen kann, sondern die Dichtlippe durch Anliegen an der ununterbrochenen Kolbenmantelfläche dichtend mit dieser abschließt.

Besonders günstig ist es, wenn bei in der Druckstellung stehendem Kolben ein Spalt zwischen einer Innenfläche der Zylinderkammer und der Kolbenmantelfläche vorliegt, und eine an das Dichtelement angrenzende Ringkammer der Zylinderkammer von einem volumenvariablen Bereich der Zylinderkammer trennt.

Ein derartiger Spalt hat den Vorteil, dass sich Druckpulsationen, die sich bis in den volumenvariablen Bereich der Zylinderkammer ausbreiten können, sich in der Ringkammer der Zylinderkammer lediglich gedämpft oder noch besser im Wesentlichen nicht als Druckschwankungen auswirken und somit das Dichtelement von derartigen pulsierenden Druckschwankungen in der Druckstellung geschützt werden kann.

Derartige Druckpulsationen können bei Kupplungs-, oder ungeregelten Bremssystemen auftreten, insbesondere treten derartige Druckpulsationen jedoch bei geregelten Bremssystemen, beispielsweise mit ABS und/oder ESP auf.

Besonders günstig ist es hierbei, wenn der Spalt zwischen der Wandfläche der Zylinderkammer und der Kolbenmantelfläche in allen Stellungen des Kolbens zwischen der Druckstellung und der Verschlussstellung minimal ist.

Der Spalt hat ein radiales Spaltmaß, das beispielsweise in einem Bereich von 0,01 mm bis 0,5 mm liegt, und eine parallel zu einer Bewegungsrichtung des Kolbens verlaufende Spaltlänge von 0,1 mm bis 10 mm.

Alternativ oder ergänzend zu den vorstehend beschriebenen Ausführungsbeispielen der erfindungsgemäßen Lösung wird die eingangs genannte Aufgabe erfindungsgemäß auch durch einen Hauptzylinder der eingangs beschriebenen Art dadurch gelöst, dass das Dichtelement von einer äußeren Öffnung des Zylindergehäuses in dieses einsetzbar ist.

Der Vorteil dieser Lösung ist darin zu sehen, dass damit die Montage des Dichtelements erleichtert ist, insbesondere die Montage eines Dichtelements nach einem oder mehreren der voranstehenden Merkmale.

Besonders vorteilhaft ist es dabei, wenn das Zylindergehäuse eine sich an die äußere Öffnung anschließende und bis zu einem Nutgrund einer Aufnahmenut für das Dichtelement reichende Bohrung aufweist, durch welche das Dichtelement einführbar ist.

Eine derartige, bis zu dem Nutgrund reichende Bohrung hat den Vorteil, dass damit keine starke Deformation des Dichtelements beim Einführen in das Gehäuse erforderlich ist, sondern das Dichtelement im Wesentlichen undeformiert in das Gehäuse einsetzbar ist.

Noch vorteilhafter ist es dabei, wenn die sich an die äußere Öffnung anschließende Bohrung mindestens eine Querschnittsfläche aufweist, welche einer Querschnittsfläche des Nutgrundes entspricht, so dass die Querschnittsfläche der Bohrung entweder denselben Querschnitt wie der Nutgrund aufweist oder größer ist und somit das Dichtelement in besonders einfacher Weise in die Nut eingeführt werden kann.

Eine zweckmäßige Lösung sieht dabei vor, dass in das Zylindergehäuse ein das Dichtelement fixierender Einsatz einsetzbar ist. Ein derartiger Einsatz hat den Vorteil, dass damit die Möglichkeit besteht, das Dichtelement zu fixieren.

Vorzugsweise ist dabei der Einsatz so ausgebildet, dass dieser im in das Zylindergehäuse eingesetzten Zustand eine Nutwand bildet und damit das Dichtelement in der Aufnahmenut fixiert.

Dabei ist zweckmäßigerweise vorgesehen, dass eine weitere, nicht vom Einsatz gebildete Nutwand in dem Zylindergehäuse vorgesehen ist, welche der von dem Einsatz gebildeten Nutwand vorzugsweise gegenüberliegt.

Ferner ist vorzugsweise der Nutgrund in dem Zylindergehäuse vorgesehen.

Ein erfindungsgemäßer Hauptzylinder ist prinzipiell bei jeder Art von Kupplungs-, Betätigungs- und Bremssystem einsetzbar.

Besondere Vorteile ergeben sich jedoch, wenn der Hauptzylinder mit einem geregelten Kupplungs-, Betätigungs- oder Bremssystem zusammenwirkt.

Ferner ist der Hauptzylinder vorzugsweise handbetätigbar oder fußbetätigbar.

Darüber hinaus betrifft die Erfindung ein Dichtelement, welches erfindungsgemäß nach einem oder mehreren der voranstehenden Merkmale ausgebildet ist.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: einen Längsschnitt durch ein erstes Ausführungsbeispiel eines erfindungsgemäßen Hauptzylinders in der Druckausgleichsstellung;
- Fig. 2: eine ausschnittsweise vergrößerte Darstellung des Längsschnitts gemäß Fig. 1 im Bereich eines Dichtelements;
- Fig. 3: eine perspektivische Darstellung eines Dichtelements von Seiten der Zylinderkammer;
- Fig. 4: eine perspektivische Darstellung des Dichtelements von Zufuhrspalt;
- Fig. 5: einen Längsschnitt durch das erfindungsgemäße Dichtelement im ausgebauten Zustand;
- Fig. 6: eine nochmals vergrößerte Darstellung des Längsschnitts gemäß Fig. 2 im Bereich des Dichtelements und des Zufuhrspalts;
- Fig. 7: eine Darstellung ähnlich Fig. 1 des Hauptzylinders in der Verschlussstellung;
- Fig. 8: eine Darstellung ähnlich Fig. 2 des Hauptzylinders in der Verschlussstellung;
- Fig. 9: eine Darstellung ähnlich Fig. 1 des Hauptzylinders in der Druckstellung;
- Fig. 10: eine Darstellung ähnlich Fig. 2 des Hauptzylinders in der Druckstellung;
- Fig. 11: einen Schnitt ähnlich Fig. 2 durch das Zylindergehäuse bei einem zweiten Ausführungsbeispiel;
- Fig. 12: einen Schnitt längs Linie 12-12 in Fig. 11;
- Fig. 13: eine Darstellung ähnlich Fig. 1 eines dritten Ausführungsbeispiels eines erfindungsgemäßen Hauptzylinders;
- Fig. 14: eine Darstellung ähnlich Fig. 1 eines vierten Ausführungsbeispiels;
- Fig. 15: eine Darstellung ähnliche Fig. 1 eines fünften Ausführungsbeispiels;
- Fig. 16: eine perspektivische Darstellung eines Schiebereinsatzes des fünften Ausführungsbeispiels;
- Fig. 17: eine Darstellung des Schiebereinsatzes gemäß Fig. 14 in einer Draufsicht in Richtung des Pfeils X in Fig. 14 und
- Fig. 18: einen Längsschnitt ähnlich Fig. 5 bei einem sechsten Ausführungsbeispiel.

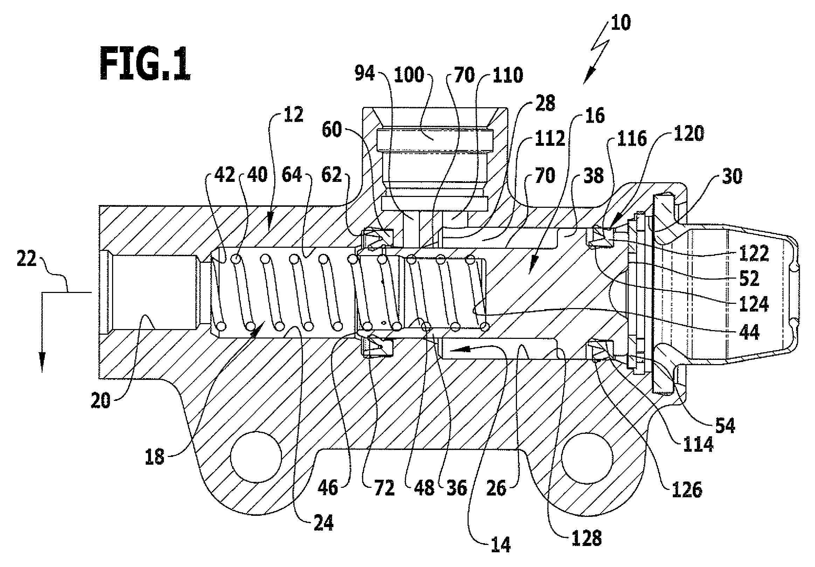

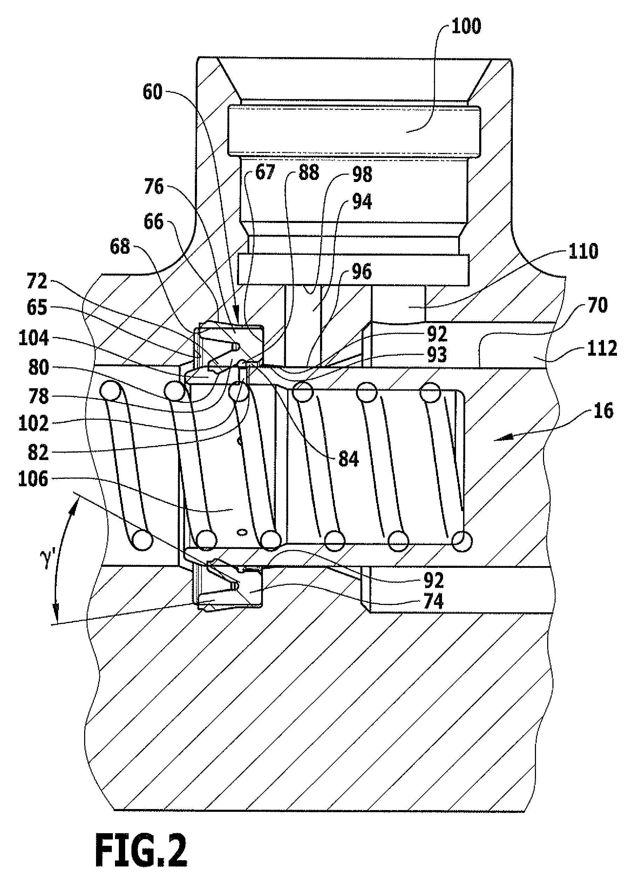

Ein in Fig. 1 und 2 dargestelltes erstes Ausführungsbeispiel eines erfindungsgemäßen Hauptzylinders 10, insbesondere eines Hauptzylinders für ein Kraftfahrzeug mit geregeltem Bremssystem, umfasst ein als Ganzes mit 12 bezeichnetes Zylindergehäuse, in welchem eine als Ganzes mit 14 bezeichnete Kolbenbohrung vorgesehen ist.

In der Kolbenbohrung 14 ist ein insgesamt mit 16 bezeichneter Kolben angeordnet, wobei der Kolben 16 in einer von dem Kolben 16 und der Kolbenbohrung 14 begrenzten Zylinderkammer 18 ein in dieser angeordnetes Hydraulikmedium unter Druck zu setzt.

Hierzu ist in dem Gehäuse 12 ein in die Zylinderkammer 18 auf einer dem Kolben 16 abgewandten Seite mündender Hydraulikanschluss 20 vorgesehen, über welchen ein Hydrauliksystem 22 an die Zylinderkammer 18 anschließbar ist, um über das Hydrauliksystem 22 beispielsweise ein nicht näher dargestelltes Kupplungs- oder Bremssystem mit dem unter Druck stehendem Hydraulikmedium zu beaufschlagen.

Die Kolbenbohrung 14 ist vorzugsweise als Stufenbohrung ausgeführt und weist im Bereich der Zylinderkammer 18 einen inneren Bohrungsabschnitt 24 auf, welcher gegenüber einem äußeren Bohrungsabschnitt 26 einen reduzierten Durchmesser hat, wobei der äußere Bohrungsabschnitt 26 mit einer Stufe 28 in den inneren Bohrungsabschnitt 24 übergeht. Der äußere Bohrungsabschnitt 26 erstreckt sich bis zu einer äußeren Öffnung 30, über welche der Kolben 16 in die Kolbenbohrung 14 einführbar ist.

Der Kolben 16 weist seinerseits einen inneren Kolbenabschnitt 36 auf, welcher hinsichtlich seines Durchmessers dem inneren Bohrungsabschnitt 24 angepasst ist und einen äußeren Kolbenabschnitt 38, welcher in dem äußeren Bohrungsabschnitt 26 geführt und an dessen Durchmesser angepasst ist.

Der Kolben 16 ist insgesamt durch eine als Ganzes mit 40 bezeichnete Druckfeder beaufschlagt, welche sich einerseits an einem Endbereich 42 des inneren Bohrungsabschnitts 24 abstützt und andererseits an einer im Kolben 16 vorgesehenen Stützfläche 44, welche eine von einer inneren Stirnseite 46 des Kolbens 16, in den inneren Kolbenabschnitt 36 sacklochähnlich eindringende Ausnehmung 48 begrenzt, in welcher die Druckfeder 40 mit ihrem in den inneren Kolbenabschnitt 36 eindringenden Abschnitt geführt ist.

Die Druckfeder 40 beaufschlagt somit den Kolben 16 stets in Richtung einer ein maximales Volumen der Zylinderkammer 18 definierenden Druckausgleichsstellung, in welcher der Kolben 16 mit einer äußeren Stirnseite 52 an einem Anschlagelement 54, beispielsweise einem Anschlagring, der an dem Zylindergehäuse 12 im Bereich der äußeren Öffnung 30 fixiert ist, anliegt.

Zur Abdichtung der Zylinderkammer 18 ist ein als Ganzes mit 60 bezeichnetes Dichtelement vorgesehen, welches in einer Aufnahmenut 62 des Gehäuses 12 angeordnet ist, die sich ausgehend von einer Innenfläche 64 des inneren Bohrungsabschnitts 24 radial nach außen in einen den Bohrungsabschnitt 24 umschließenden Wandbereich des Gehäuses 12 mit Nutwänden 65 und 67 bis zum einen Nutgrund 68 hineinerstreckt.

Dabei ist das Dichtelement 60 so angeordnet, dass dieses bei in der Druckausgleichsstellung stehendem Kolben 16 an einer rotationssymmetrischen und zylindrischen und über eine Länge des Kolbens 16 querschnittsinvariante Kolbenmantelfläche 70 in einem nahe der inneren Stirnseite 46 liegenden vorderen Bereich 72 dichtend anliegt.

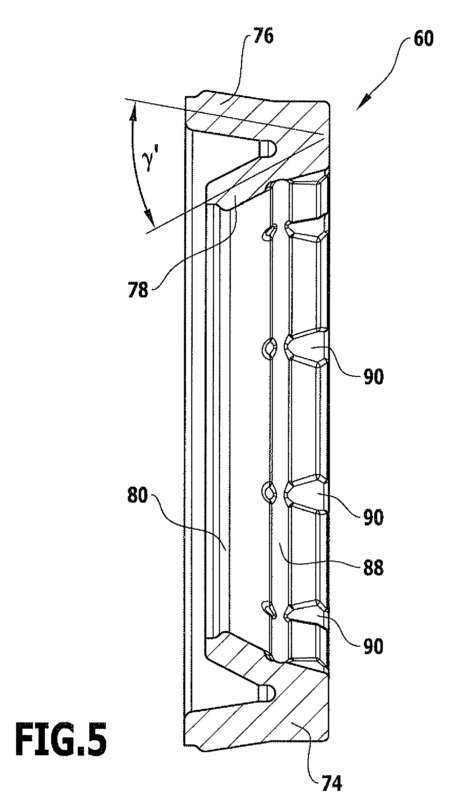

Das Dichtelement 60 umfasst seinerseits, wie insbesondere in Fig. 2 bis 5 dargestellt, einen ringförmigen Basiskörper 74, von welchem ausgehend sich eine radial außenliegende Stützlippe 76 erstreckt, wobei die Stützlippe 76 sowie der Basiskörper 74 mit Außenflächen 66 in dem Nutgrund 68 anliegen und durch diesen abgestützt sind.

Ferner erstreckt sich ausgehend von dem Basiskörper 74 vorzugsweise in einem spitzen Winkel zur Stützlippe 76 eine Dichtlippe 78, welche mit einer dem Kolben 16 zugewandten Dichtfläche 80 bei in der Druckausgleichsstellung stehendem Kolben 16 an dem vorderen Bereich 72 der Kolbenmantelfläche 70 anliegt und mit dieser dichtend abschließt.

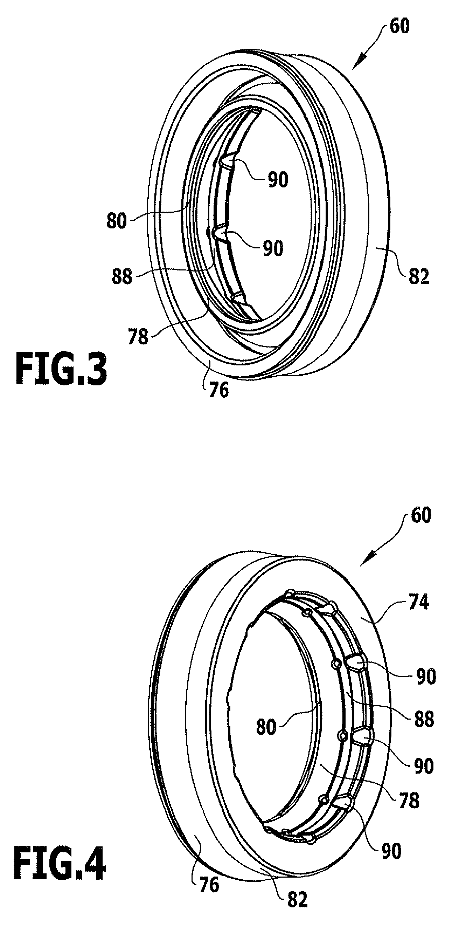

Zur Illustration des Aufbaus des ringförmigen Dichtelements 60 ist dieses nochmals im Einzelnen in den Fig. 3 bis 5 dargestellt.

Vorzugsweise haben die Stützlippe 76 und die Dichtlippe 78 eine V-förmige Ausrichtung relativ zueinander, so dass sie sich im nicht eingebauten Zustand ungefähr in einem Winkel γ ausgehend von dem Basiskörper 74 erstrecken, wobei im eingebauten Zustand die Stützlippe 76 durch das Anliegen am Nutgrund 68 in Richtung der Dichtlippe 78 deformiert ist und die Dichtlippe 78 durch das Anliegen an der Kolbenmantelfläche 70 in Richtung der Stützlippe 76 deformiert ist, so dass ein Winkel γ' zwischen der Stützlippe 76 und der Dichtlippe 78 im eingebauten Zustand kleiner ist als der Winkel γ im nicht eingebauten Zustand des Dichtelements 60.

Bei dem eingebauten Dichtelement 60 erhebt sich der Basiskörper 74 über dem Nutgrund 68 so weit, dass zwischen dem Nutgrund 68 abgewandten und dem Kolben 16 zugewandten Innenflächenbereich 82 des Dichtelements 60, insbesondere des Basiskörpers 74, und der Kolbenmantelfläche 70 ein Nachlaufraum 84 gebildet wird, der sich im Bereich der Aufnahmenut 62 von der der Zylinderkammer 18 abgewandten Nutwand 67 in Richtung der Zylinderkammer 18 bis zu einer von den Innenflächenbereichen 82 umfassten ringförmigen Eintiefung 88 im Dichtelement 60 erstreckt, welche in einem Fußbereich der Stützlippe 76 und ungefähr zwischen dem Fußbereich der Stützlippe 76 und dem Basiskörper 74 auf einer der Kolbenmantelfläche 70 zugewandten Seite angeordnet ist und welche ringförmig um den Kolben 16 umläuft (siehe Fig. 2).

Zu dieser Eintiefung 88 führen noch zusätzliche von den Innenflächenbereichen 82 umfasste Überströmkanäle 90, die sich ausgehend von der ringförmigen Eintiefung 88 in Richtung der Nutwand 67 erstrecken.

Die Überströmkanäle 90 dienen dazu, im Bereich des Nachlaufraums 84 einen vergrößerten Strömungsquerschnitt für zu der Eintiefung 88 fließendes Hydraulikmedium zur Verfügung zu stellen.

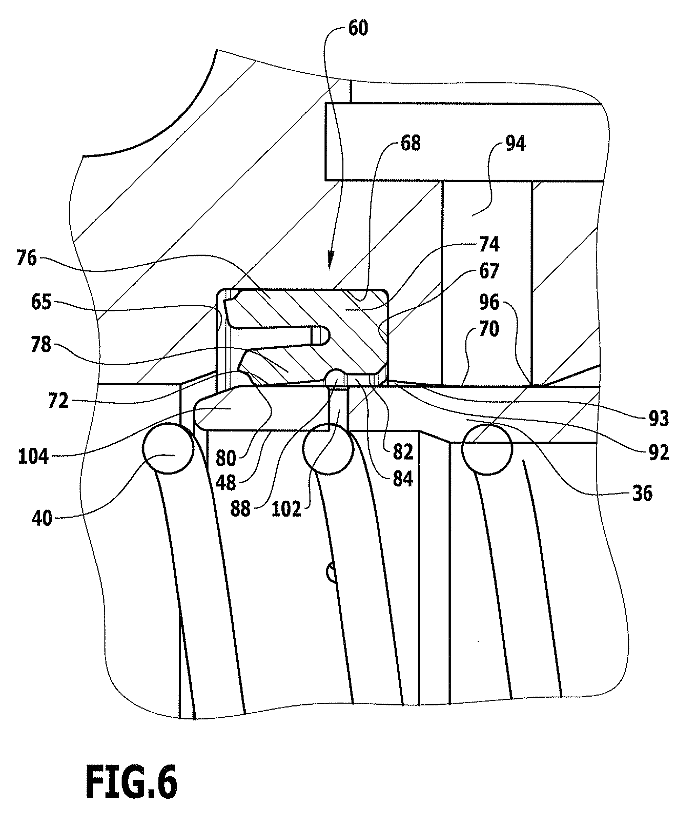

Das Hydraulikmedium tritt, wie in Fig. 2 und Fig. 6 dargestellt, in den Nachlaufraum 84 durch einen Zufuhrspalt 92 ein, welcher sich in einem Wandabschnitt 93 des inneren Bohrungsabschnitts 24 ausgehend von der Nutwand 67 in Richtung von der Zylinderkammer 18 weg erstreckt bis zu einem Zufuhrkanal 94, welcher eine der Kolbenmantelfläche 70 zugewandte Zufuhröffnung 96 aufweist sowie eine Eintrittsöffnung 98, über welche einem Hydraulikanschluss 100 drucklos zur Verfügung gestelltes Hydraulikmedium in den Zufuhrkanal 94 eintreten kann.

Das Hydraulikmedium durchströmt dabei den Zufuhrkanal 94 und tritt aus diesem aus seiner Zufuhröffnung 96 aus, die an die Kolbenmantelfläche 70 angrenzt und strömt von dieser Zufuhröffnung 96 über den Zufuhrspalt 92 zum Nachlaufraum 84.

Vorzugsweise ist der Zufuhrspalt 92 so ausgebildet, dass dieser sich ausgehend von einem die Zufuhröffnung 96 angrenzenden Bereich zum Nachlaufraum 84 hin erweitert, wie in Fig. 6 dargestellt.

Um die Möglichkeit zu eröffnen, dass sich in der Druckausgleichstellung des Kolbens 16 ein durch Verlust von Hydraulikmedium im Hydrauliksystem 22 in der Zylinderkammer 18 auftretender Unterdruck durch nachlaufendes Hydraulikmedium ausgleichen kann, ist der Kolben 16 in seinem inneren Kolbenabschnitt 36 mit Nachlaufbohrungen 102 versehen, die eine zwischen der Kolbenmantelfläche 70 und der Ausnehmung 48 liegende Kolbenwand 104 durchsetzen und somit die Möglichkeit eröffnen, dass durch diese Nachlaufbohrungen 102 Hydraulikmedium von dem Nachlaufraum 84 in die Zylinderkammer 18 eintreten kann, wobei das Hydraulikmedium in eine von der Ausnehmung 48 umschlossenen Innenraum 106 des inneren Kolbenabschnitts 36 eintritt und dann von diesem in die Zylinderkammer 18 übertreten kann, wie in Fig. 1 und Fig. 2 dargestellt.

Die Nachlaufbohrungen 102, die vorzugsweise über den Umfang des inneren Kolbenabschnitts 36 verteilt sind, liegen dabei in der Ausgleichsstellung des Kolbens 16 so, dass diese im Bereich der Eintiefung 88 des Dichtelements 60 in den Nachlaufraum 84 münden, so dass das über den Zufuhrkanal 94 zuströmende Hydraulikmedium durch die Zufuhröffnung 96 und den Zufuhrspalt 92 in den Nachlaufraum 84 eintritt, von dort durch die Überströmkanäle 90 in die Eintiefung 88 strömt und von dieser, da diese um den gesamten Kolben 16 umlaufend ausgebildet ist, in die Nachlaufbohrungen 102 eintreten und in den Innenraum 106 des Kolbens 16 strömen kann.

Von dem Hydraulikanschluss 100 führt ferner noch ein Kanal 110 zu einem Hydraulikraum 112 der auf einer der Zylinderkammer 18 abgewandten Seite des inneren Dichtelements 60 liegt und mit Hydraulikmedium gefüllt ist, so dass von einer der Zylinderkammer 18 abgewandten Seite des inneren Dichtelements keine Luft in die Zylinderkammer 18 eintreten kann, sondern bei einer geringfügigen Leckage lediglich ein Austausch von Hydraulikmedium erfolgt.

Der Hydraulikraum 112 erstreckt sich bis zu dem äußeren Kolbenabschnitt 38, mit welchem der Kolben 16 in dem äußeren Bohrungsabschnitt 26 geführt ist, wobei in dem äußeren Kolbenabschnitt 38 eine umlaufende Nut 114 vorgesehen ist, in welcher das äußere Dichtelement 120 sitzt, welches ebenfalls mit einer von einem Basiskörper 122 ausgehenden Stützlippe 124 im Nutgrund der Nut 114 anliegt und mit einer Dichtlippe 126 an der Innenfläche 128 des äußeren Bohrungsabschnitts 26 anliegt, um eine Abdichtung zwischen dem Hydraulikraum 112 und der an der äußeren Stirnseite 52 des Kolbens 16 angrenzenden Umgebung mit Luft herzustellen.

Das äußere Dichtelement 120 ist dabei mit dem Kolben 16 mitbewegbar, so dass die Dichtlippe 126 an der Innenfläche 128 entlanggleitet, wobei beim Verschieben des Kolbens 16 in Richtung der Zylinderkammer 18 der Hydraulikraum 112 verkleinert wird und bei einer Bewegung in Richtung von der Zylinderkammer 18 weg vergrößert wird.

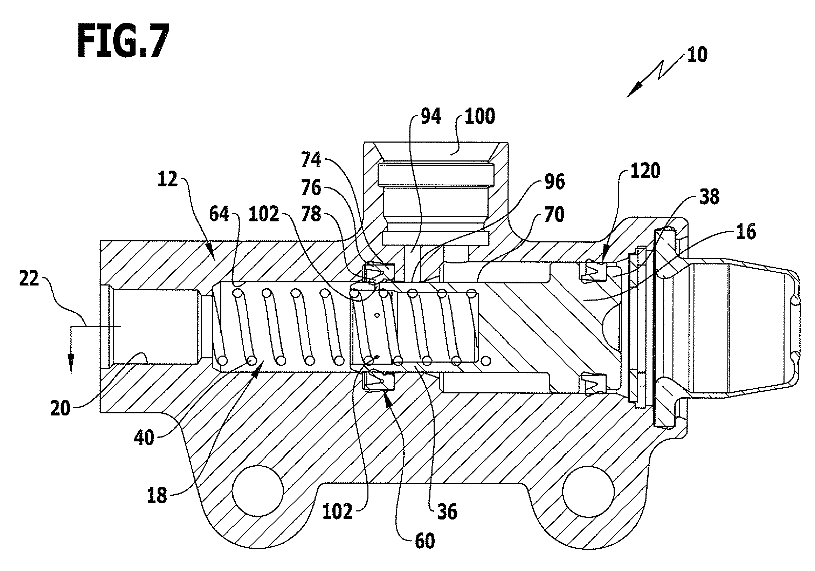

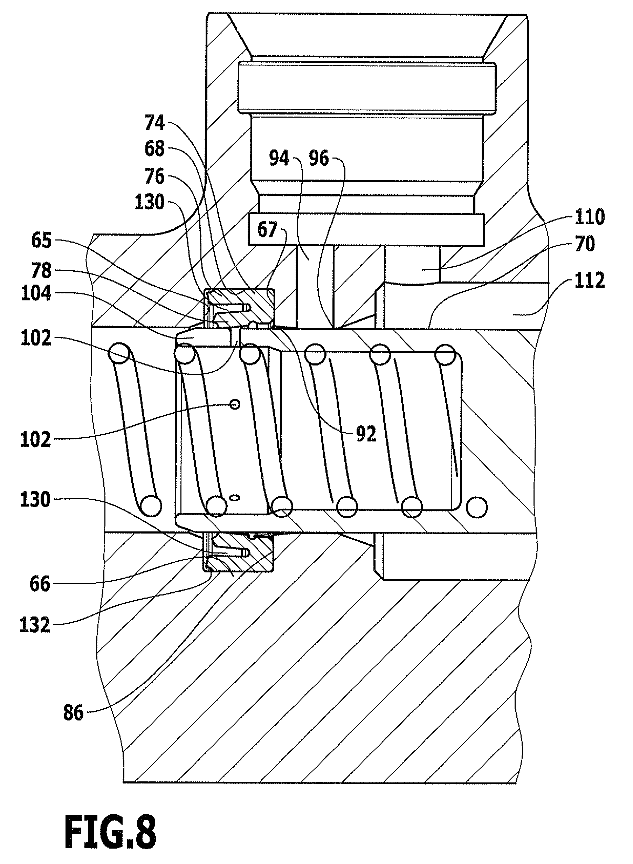

Zum Aufbau eines Drucks in der Zylinderkammer 18 erfolgt ein Beaufschlagen des Kolbens 16 in Richtung der Zylinderkammer 18, so dass sich dieser, wie in Fig. 6 und 7 dargestellt, in Richtung der Zylinderkammer 18 bewegt, wobei die Nachlaufbohrungen 102 bei der Bewegung des Kolbens 16 ebenfalls in Richtung der Zylinderkammer 18 wandern und dabei, wie in Fig. 7 und 8 dargestellt, zunächst eine Verschlussstellung erreichen, in welcher die Dichtlippe 78 die Nachlaufbohrungen 102 mit ihrer Dichtfläche 80 verschließt, so dass ab Erreichen dieser Verschlussstellung der Nachlaufraum 84 und die Zylinderkammer 18 von einander getrennt sind und ein Druckausgleich durch Nachstromen von Hydraulikmedium nicht mehr erfolgt.

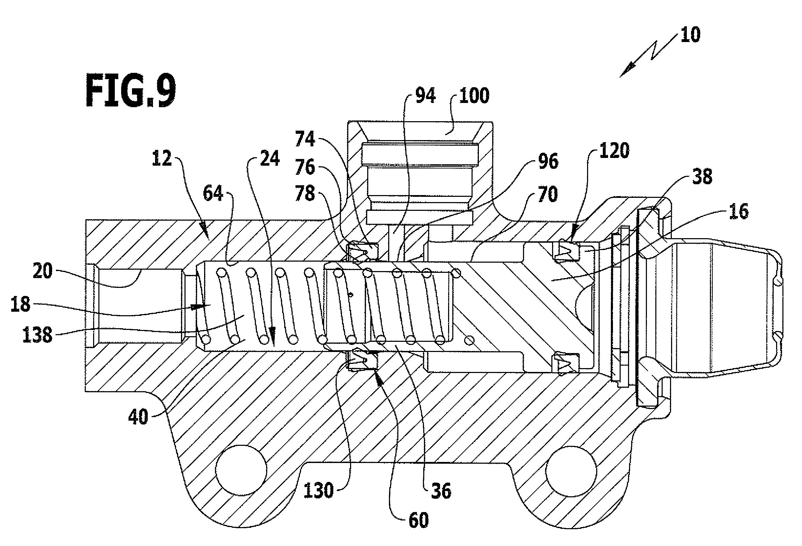

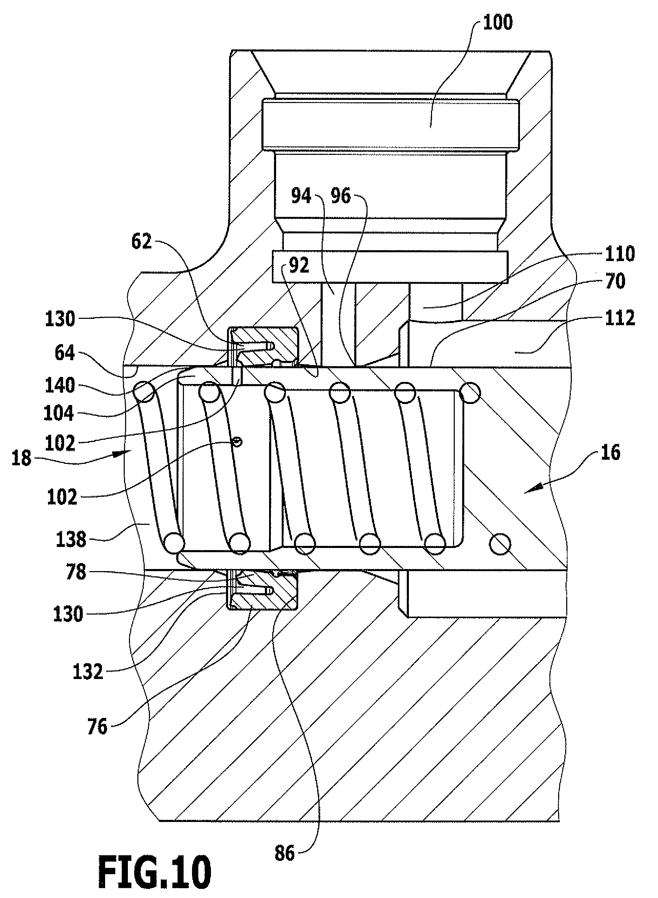

Eine weitere Bewegung des Kolbens 16 in Richtung der Zylinderkammer 18 führt zu einem weiteren Verschieben der Nachlaufbohrungen 102 unter der Dichtlippe 78 hinweg in eine in Fig. 9 und 10 dargestellte Druckstellung, in welcher die Nachlaufbohrungen 102 so stehen, dass diese in eine Ringkammer 130 münden, die Teil der Zylinderkammer 18 ist und im Bereich der Ringnut 62 zwischen einer der Nutwand 86 gegenüberliegenden Nutwand 132, der Dichtlippe 89 und der Stützlippe 76 liegt, und zwar auf einer der Zylinderkammer 18 zugewandten Seite des Dichtelements 60, wobei die Ringkammer 130 von einem volumenvariablen Bereich 138 der Zylinderkammer 18 durch einen sich zwischen der Kolbenmantelfläche 70 und der Innenfläche 64 bildenden Spalt 140 in der Druckstellung des Kolbens 16 getrennt ist.

Bei weiterer Beaufschlagung des Kolbens 16 wandern die Nachlaufbohrungen 102 in eine Stellung, in welcher diese von der Innenfläche 64 im Bereich des Spaltes 140 überdeckt und somit funktionsunfähig sind.

Bei nachlassender Beaufschlagung des Kolbens 16 wandert dieser aufgrund der Wirkung der Kraft der Druckfeder 40 wieder in Richtung der Druckausgleichsstellung, wobei die Nachlaufbohrungen 102 zunächst wiederum an die Ringkammer 130 angrenzen und dann unter der Dichtfläche 80 der Dichtlippe 78 hindurchlaufen, bis sie wieder in einer mit dem Nachlaufraum 84 in Verbindung stehenden Druckausgleichsstellung stehen, in welcher die Nachlaufbohrungen 102 eine Verbindung zwischen dem Nachlaufraum 84 und der Zylinderkammer 18 herstellen, um Hydraulikmedium in die Zylinderkammer 18 zum Druckausgleich nachströmen zu lassen.

Für den Fall, dass in der Zylinderkammer 18 ein großer Unterdruck entsteht, ist das innere Dichtelement 60 so konzipiert, dass die Dichtlippe 78 die Möglichkeit hat, von der Kolbenmantelfläche 70 abzuheben oder zumindest teilweise abzuheben, so dass zum Nachströmen von Hydraulikmedium aus dem Nachlaufraum 84 in die Zylinderkammer 18 ein größerer Querschnitt zur Verfügung steht, als dies durch die Nachlaufbohrungen 102 der Fall ist. Dadurch besteht die Möglichkeit, auch große Hydraulikverluste in der Zylinderkammer 18 und einen beim Bewegen des Kolbens 16 von der Druckstellung in Richtung der Druckausgleichsstellung entstehenden Unterdruck in dieser rasch auszugleichen.

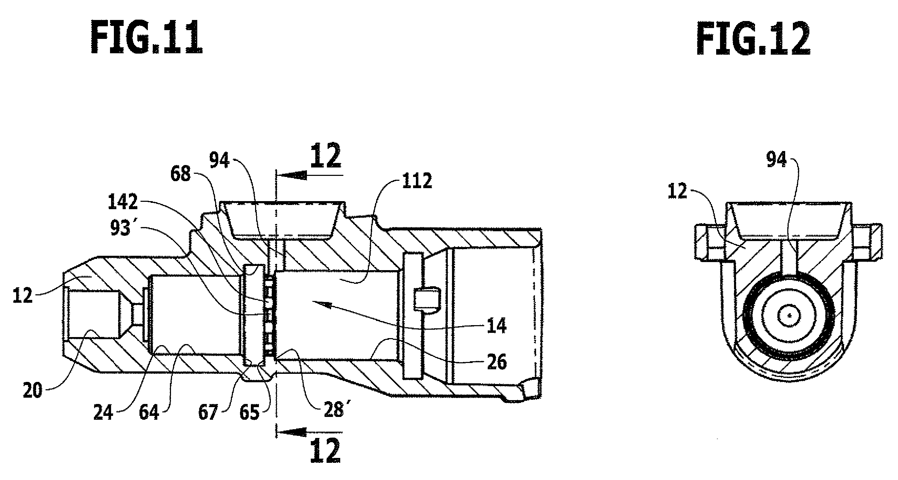

Bei einem zweiten Ausführungsbeispiel, dargestellt in Fig. 11 und 12, eines erfindungsgemäßen Hauptzylinders 10', sind diejenigen Teile, die mit denen des ersten Ausführungsbeispiels identisch sind, mit denselben Bezugszeichen versehen, so dass diesbezüglich vollinhaltlich auf die Ausführungen zum ersten Ausführungsbeispiel verwiesen werden kann.

Im Gegensatz zum ersten Ausführungsbeispiel sind beim zweiten Ausführungsbeispiel anstelle des Spalts 92 zwischen dem Zufuhrkanal 94 und dem Nachlaufraum 84 Zufuhrausschnitte 142 in dem Wandabschnitt 93' vorgesehen, wobei der Wandabschnitt 93' sich bis zu der Stufe 28' erstreckt, so dass von Seiten des Hydraulikraums 112 Hydraulikmedium in den Nachlaufraum 84 eintreten kann.

Dabei sind vorzugsweise mehrere Zufuhrausschnitte 142 rings um den Kolben 16 in dem Wandabschnitt 93' angeordnet und diese weisen ausgehend von der Stufe 28 mit zunehmender Erstreckung in Richtung der Zylinderkammer 18 ausgehenden von der zylindrischen Innenfläche 64 eine geringer werdende Tiefe auf, so dass die Tiefe im Bereich der Nutwand 67 minimal ist und folglich kann das Dichtelement 60 nicht in die Zufuhrausschnitte 142 eingedrückt werden.

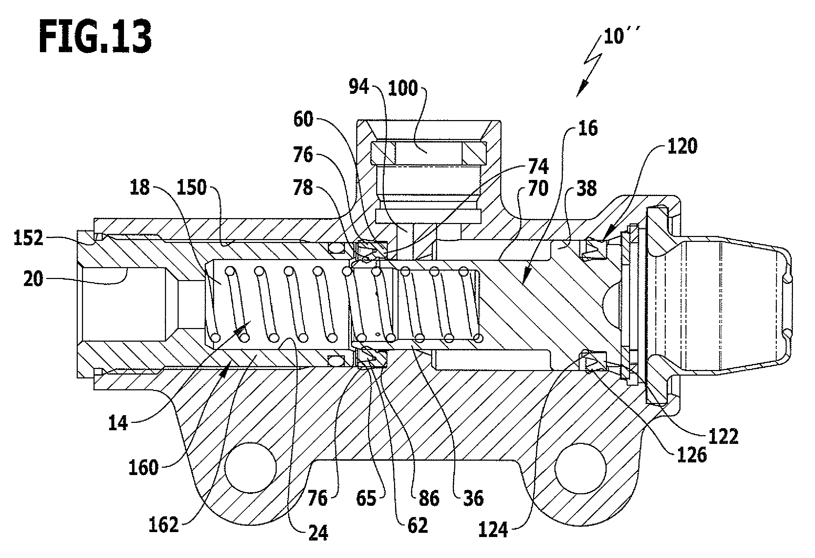

Bei einem dritten Ausführungsbeispiel eines erfindungsgemäßen Hauptzylinders 10", dargestellt in Fig. 13, sind diejenigen Teile, die mit denen der voranstehenden Ausführungsbeispiele identisch sind, mit denselben Bezugszeichen versehen, so dass hinsichtlich der Beschreibung derselben vollinhaltlich auf die Ausführungen zum ersten Ausführungsbeispiel Bezug genommen werden kann.

Im Gegensatz zum ersten Ausführungsbeispiel ist die Aufnahmenut 62 dadurch gebildet, dass die Nutwand 67 sowie der Nutgrund 68 in dem Gehäuse 12 ausgebildet sind, der Nutgrund 68 jedoch ein Teilbereich einer Einsatzbohrung 150 ist, welche von der Nutwand 86 bis zu einer äußeren Öffnung 152 führt.

In diese Einsatzbohrung 150 ist ein als Ganzes mit 160 bezeichneter Einsatz einsetzbar, welcher seinerseits die Nutwand 65 aufweist und mit einem Hülsenkörper 162 den die Zylinderkammer 18 umschließenden inneren Bohrungsabschnitt 24 bildet, in welchen der Kolben 16 mit dem inneren Kolbenabschnitt 36 zum Einnehmen der Druckstellung hinein bewegbar ist.

Ferner nimmt der Einsatz noch den Hydraulikanschluss 20 auf, der auf einer dem Kolben 16 gegenüberliegenden Seite in die Zylinderkammer 18 mündet.

Der Einsatzkörper 160 eröffnet dabei die Möglichkeit, das Dichtelement 60 in einfacher Weise über die Öffnung 152 in das Gehäuse 12 einzusetzen und zwischen der Nutwand 86 und der Nutwand 132 nach Einsetzen des Einsatzes 160 zu fixieren.

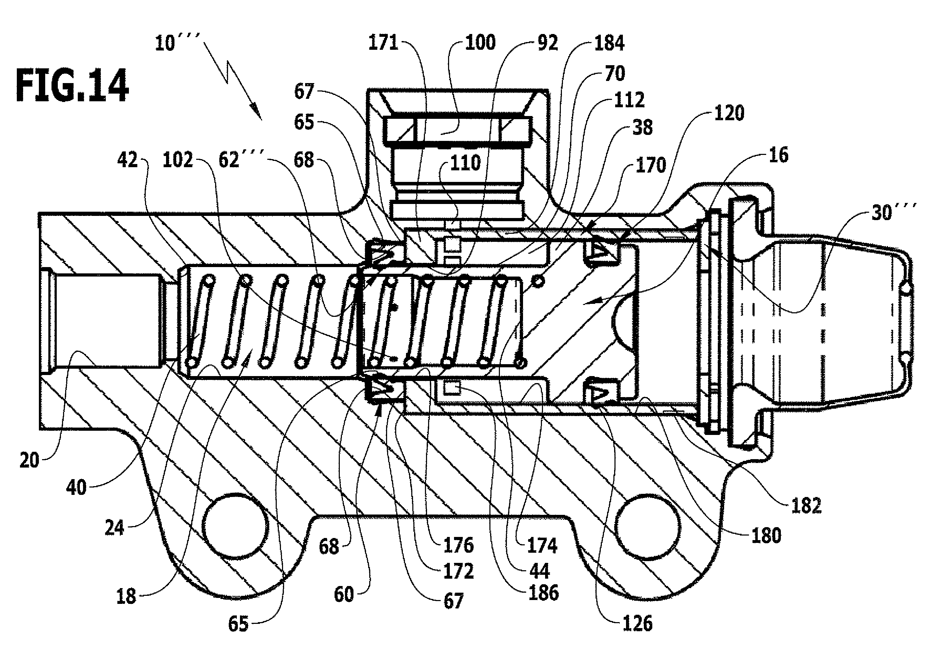

Bei einem vierten Ausführungsbeispiel eines erfindungsgemäßen Hauptzylinders 10"'. dargestellt in Fig. 14, sind diejenigen Teile, die mit denen der voranstehenden Ausführungsbeispiele identisch sind, mit denselben Bezugszeichen versehen, so dass hinsichtlich der Beschreibung der übrigen Merkmale vollinhaltlich auf die Ausführungen zu den voranstehenden Ausführungsbeispielen Bezug genommen werden kann.

Im Gegensatz zu den voranstehenden Ausführungsbeispielen ist die Aufnahmenut 62"' dadurch gebildet, dass die Nutwand 65 und der Nutgrund 68 in dem Gehäuse 12 ausgebildet sind, jedoch die Nutwand 67 durch eine an einem Endflansch 171 vorgesehene Stirnfläche 172 eines als Ganzes mit 170 bezeichneten hülsenförmigen Einsatzes gebildet ist.

Der Einsatz 170 sitzt in einer sich von der äußeren Öffnung 30'" auf der der Zylinderkammer 18 abgewandten Seite des Gehäuses 12 in dieses hineinerstreckenden Einsatzbohrung 180 und ist von Seiten der Öffnung 30'" in diese Einsatzbohrung 180 einschiebbar und in dieser fixierbar um eine Montage des Dichtelements 60 über die äußere Öffnung 30'" zu erleichtern.

Der Einsatz 170 ist seinerseits im Bereich des Endflansches 171 mit einer zylindrischen Ausnehmung 174 versehen, in welcher der Kolben 16 mit seinem äußeren Kolbenabschnitt 38 in vergleichbarer Weise geführt ist, wie beim ersten Ausführungsbeispiel in dem Wandabschnitt 93 des inneren Bohrungsabschnitts 24.

Ferner ist der Kolben 16 in einer Führungsausnehmung 176 des Einsatzes 170 im Bereich seiner Kolbenmantelfläche 70 geführt, und zwar im Anschluss an die Stirnfläche 172, so dass der Hydraulikraum 112 innerhalb des Einsatzes 170 und der Hydraulikraum 112 wie beim ersten und zweiten Ausführungsbeispiel durch das Dichtelement 60 gegenüber der Zylinderkammer 18 abgedichtet ist.

Außerdem ist der Kolben 16 noch mittels des Dichtelements 120 relativ zu der zylindrischen Ausnehmung 174 abgedichtet, in gleicher Weise, wie eine Abdichtung beim ersten und zweiten Ausführungsbeispiel zum äußeren Bohrungsabschnitt 26 erfolgt.

Um eine Leckage zwischen dem Einsatz 170 und der Einsatzbohrung 180 zu vermeiden ist der Einsatz 170 relativ zur Einsatzbohrung 180 noch mit einer umlaufenden Dichtung 182 abgedichtet.

Die Zufuhr von Hydraulikmedium zum Hydraulikraum 112 erfolgt über den Kanal 110 und in einer Wand 184 des Einsatzes 170 vorgesehene Öffnungen 186, wobei zum Einlaufen von Hydraulikmedium in die Eintiefung 88 die Führungsausnehmung 176 ebenfalls mit einem Zufuhrspalt 92' versehen ist, der mit dem Nachlaufraum 84 in derselben Weise, wie bereits im Zusammenhang mit dem ersten Ausführungsbeispiel beschrieben, in Verbindung steht.

Bei dem vierten Ausführungsbeispiel ist somit zunächst das Dichtelement 60 über die äußere Öffnung 30"' und die Einsatzbohrung 180 bis zum Nutgrund 68 einschiebbar und dann durch Einführen des Einsatzes 170, der die Nutwand 67 bildet, in der komplettierten Nut 62"' fixierbar, so dass das Dichtelement 60 dieselbe Wirkung wie bei den voranstehenden Ausführungsbeispielen entfalten kann.

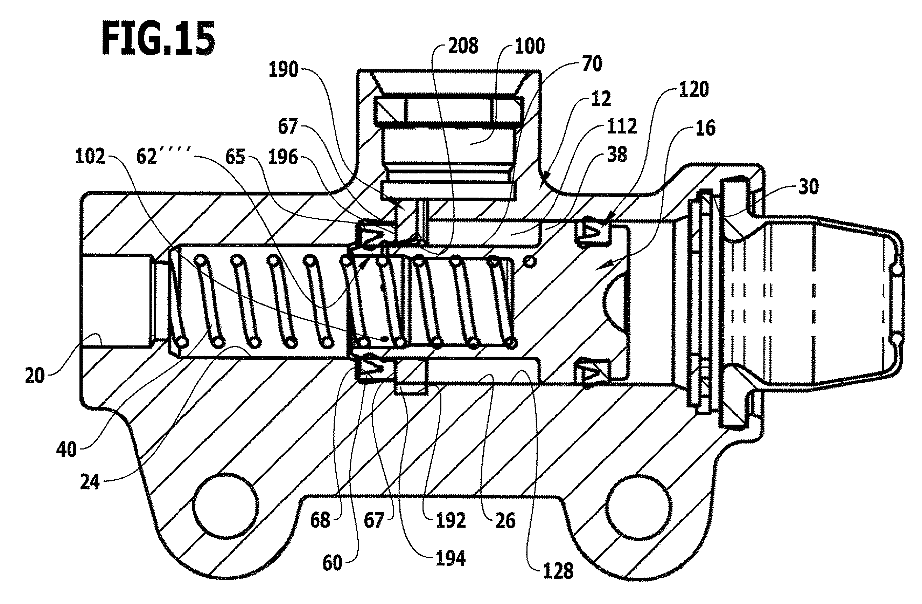

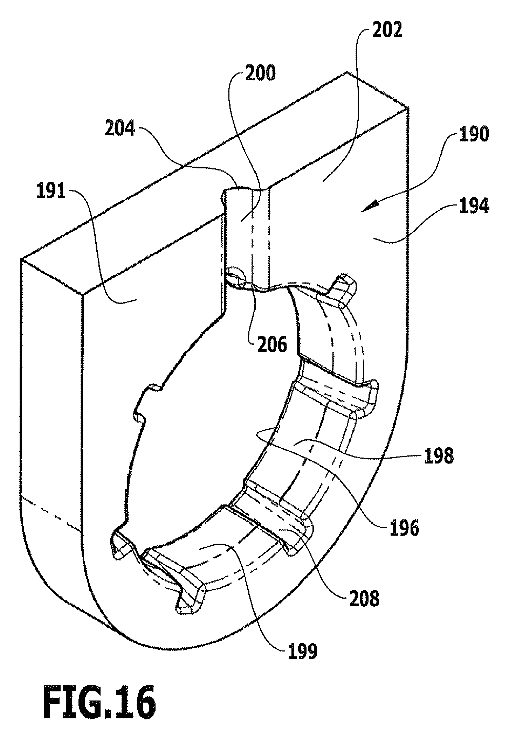

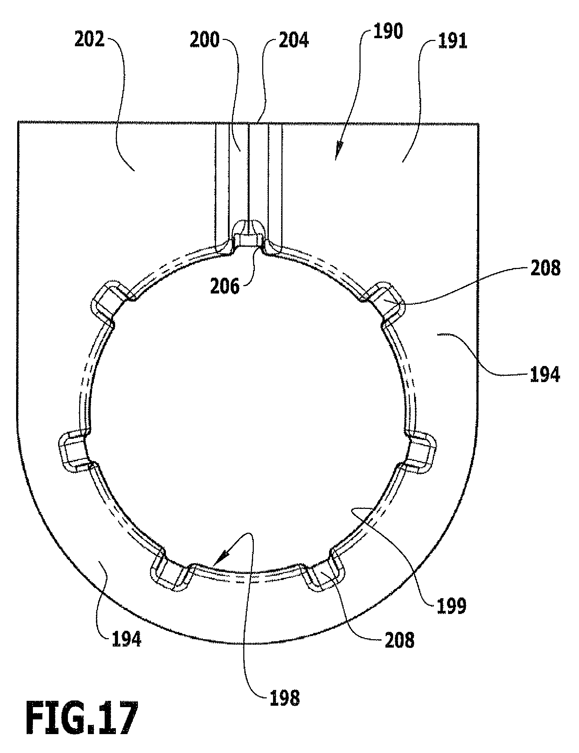

Bei einem fünften Ausführungsbeispiel eines erfindungsgemäßen Hauptzylinders 10"", dargestellt in Fig. 15 bis 17 sind diejenigen Teile, die mit denen der voranstehenden Ausführungsbeispielen identisch sind, mit denselben Bezugszeichen versehen, so dass hinsichtlich der Beschreibung er übrigen Merkmale vollinhaltlich auf die Ausführungen zu diesen Ausführungsbeispielen Bezug genommen werden kann.

Im Gegensatz zu den voranstehenden Ausführungsbeispielen ist die Aufnahmenut 62"" auf ihrer der Zylinderkammer 18 abgewandten Seite dadurch begrenzt, dass die Nutwand 67 von einem Schiebereinsatzkörper 191 eines Schiebereinsatzes 190 gebildet ist, der quer zur Bewegungsrichtung des Kolbens 16 in eine Schiebereinsatzaufnahme 192 im Zylindergehäuse 12 über den Hydraulikeinlass 100 einschiebbar ist.

Vorzugsweise ist die Schiebereinsatzaufnahme 192 als eine Ausnehmung ausgebildet, die sich ausgehend von den Innenflächen 128 des äußeren Bohrungsabschnitts 26 noch tiefer in das Zylindergehäuse 12 hinein erstreckt, um den Schiebereinsatz 190 im Bereich seiner Randbereiche 194 aufzunehmen.

Der Schiebereinsatz 190 bildet vorzugsweise die Nutwand 67 mittels einer der Zylinderkammer 20 zugewandten Seitenfläche 196, welche sich an eine Führungsausnehmung 198 im Schiebereinsatz 190 anschließt.

Die Führungsausnehmung 198 wird bei in dem Zylindergehäuse 12 montierten Schiebereinsatz 190 von dem Kolben 16 durchsetzt und führt den Kolben 16 mindestens in seiner Druckausgleichsstellung mit einer Führungsfläche 199 im Bereich der Kolbenmantelfläche 70.

Eine Zufuhr von Hydraulikmedium über den Hydraulikanschluss 100 erfolgt mittels eines in dem Schiebereinsatz 190 vorgesehenen Kanals 200, welcher in einem dem Hydraulikanschluss 100 zugewandten Bereich 202 des Schiebereinsatzkörpers 191 von einem Kanaleingang 204 zu einem in der Führungsausnehmung 198 liegenden Kanalausgang 206 führt, wobei der Kanalausgang 206 vorzugsweise in einem von mehreren Zufuhrausschnitten 208 liegt, die alle zur Zufuhr von Hydraulikmedium aus dem Hydraulikraum 112 zu dem Nachlaufraum 84 und der Eintiefung 88 -wie im Zusammenhang mit dem zweiten Ausführungsbeispiel beschrieben - dienen und vorzugsweise um den Kolben 16 herum angeordnet sind.

Die Zufuhrausschnitte 208 erstrecken sich von der Führungsfläche 199 ausgehend in Richtung des Nachlaufraums 84 und dabei zunehmend weniger tief in den Schiebereinsatzkörper 191 hinein und haben dieselbe Funktion wie die Zufuhrausschnitte 142 beim zweiten Ausführungsbeispiel.

Auch bei dem fünften Ausführungsbeispiel ist die Montage des Dichtelements 60 erleichtert, da dieses über äußere Öffnung 30 und über die sich an diese anschließende äußere Bohrung 26, deren zylindrische Innenfläche 128 vorzugsweise in den Nutgrund 68 übergehen und dabei dieselbe Querschnittsfläche oder eine größere Querschnittsfläche als der Nutgrund 68 haben, bis zum Nutgrund 68 einführbar ist, so dass ein nachfolgendes Einsetzen des Schiebereinsatzes 190 in die Schiebereinsatzaufnahme 192 das Dichtelement 60 in der Aufnahmenut 62 festlegt.

Der Hauptzylinder 10"" gemäß dem fünften Ausführungsbeispiel wird dann durch Einsetzen des Kolbens 16 über die äußere Öffnung 30 weiter komplettiert.

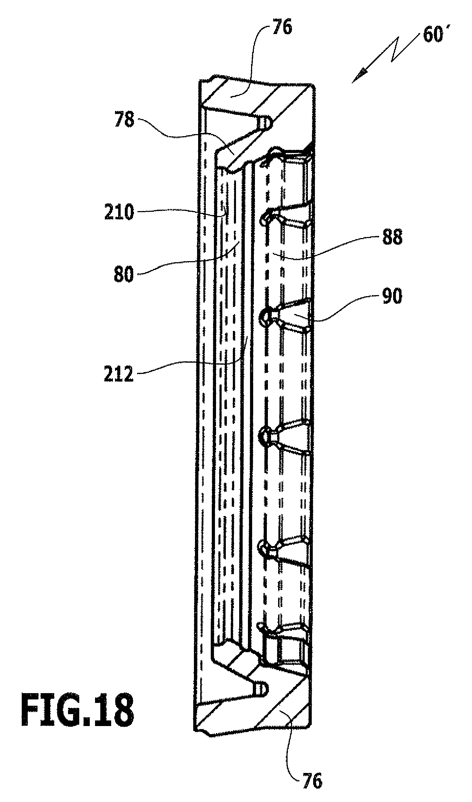

Bei einem sechsten Ausführungsbeispiel eines erfindungsgemäßen Hauptzylinders, dargestellt in Fig. 18, ist das Dichtelement 60', zwischen der Eintiefung 88und einem Kamm 210 der Dichtfläche 80 mit einer Rille 212 versehen, welche die auf der Kolbenmantelfläche 70 aufliegende Dichtfläche 80 der Dichtlippe 78 auf den Bereich zwischen dem Kamm 210 und der Rille 212 begrenzt und somit das Gleiten der Dichtlippe 78 auf der Kolbenmantelfläche 70 verbessert.

Außerdem ist die Rille 212 so dimensioniert, dass sie Hydraulikmedium hält und in der Art einer Schmiermitteltasche wirkt, um ein leichtes Gleiten des zwischen dem Kamm 210 und der Rille 212 liegenden Bereichs der Dichtlippe 78 sicherzustellen.

Im Übrigen sind alle weiteren Teile mit denen von einem der voranstehenden Ausführungsbeispiele identisch, so dass auf die Ausführungen im Zusammenhang mit diesen Ausführungsbeispielen vollinhaltlich verwiesen wird.

## Patentansprüche

1. Hauptzylinder, insbesondere für ein Kupplungs-, Betätigungs- oder Bremssystem eines Fahrzeugs, umfassend ein Zylindergehäuse (12) mit einer Kolbenbohrung (14), einen in der Kolbenbohrung (14) angeordneten Kolben (16) mit einer einer Zylinderkammer (18) zugewandten Stirnseite (46) und mit mindestens einer im Abstand von der Stirnseite (46) von einer Kolbenmantelfläche (70) durch eine Kolbenwand (104) zu der Zylinderkammer (18) führenden Nachlauföffnung (102), die in einer Druckausgleichsstellung des Kolbens (16) an einen Nachlaufraum (84) angrenzt, so dass in der Druckausgleichstellung Hydraulikmedium zum Druckausgleich in die Zylinderkammer (18) nachlaufen kann, und ein zwischen dem Gehäuse (12) und dem Kolben (16) im Bereich der Kolbenbohrung (14) angeordnetes und die Zylinderkammer (18) begrenzendes inneres Dichtelement (60),
**dadurch gekennzeichnet, dass** das Dichtelement (60) bei in der Druckausgleichsstellung stehendem Kolben (16) an einer rotationssymmetrischen und zylindrischen über eine Länge des Kolbens (16) querschnittsinvarianten Kolbenmantelfläche (70) dichtend anliegt, dass der Nachlaufraum (84) zwischen dem Dichtelement (60) und der Kolbenmantelfläche (70) auf einer der Zylinderkammer (18) abgewandten Seite einer Dichtlippe (78) des Dichtelements (60) angeordnet ist und dass die mindestens eine Nachlauföffnung (102) in der Druckausgleichstellung einer den Nachlaufraum (84) begrenzenden Innenfläche (82) des Dichtelements (60) gegenüberliegend angeordnet ist.

2. Hauptzylinder nach Anspruch 1, **dadurch gekennzeichnet, dass** das Dichtelement zur Bildung des Nachlaufraums (84) im Abstand von der Kolbenmantelfläche (70) verlaufende Innenflächenbereiche (88, 90) aufweist, und dass insbesondere die Innenflächenbereiche (88, 90) eine um die Kolbenmantelfläche (70) umlaufende Eintiefung (88) bilden.

3. Hauptzylinder nach Anspruch 2, **dadurch gekennzeichnet, dass** die Innenflächenbereiche (88, 90) zu einer der Zylinderkammer (18) abgewandten Seite des Dichtelements (60) führende Überströmkanäle (90) bilden.

4. Hauptzylinder nach Anspruch 3, **dadurch gekennzeichnet, dass** die Überströmkanäle (90) ungefähr parallel oder spiral-oder wendelförmig zu einer Bewegungsrichtung des Kolbens (16) verlaufen.

5. Hauptzylinder nach Anspruch 3 oder 4, **dadurch gekennzeichnet, dass** der Nachlaufraum (84) sich an eine zwischen der Kolbenmantelfläche (70) und der Kolbenbohrung (14) liegende Zufuhrausnehmung (92, 142, 208) anschließt.

6. Hauptzylinder nach einem der voranstehenden Ansprüche, **dadurch gekennzeichnet, dass** das Dichtelement (60) einen ringförmigen Basiskörper (74) aufweist, dass insbesondere von dem Basiskörper (74) ausgehend sich in Richtung der Zylinderkammer (18) eine radial innenliegende Dichtlippe (78) erstreckt, und dass insbesondere die Dichtlippe (78) radial nach innen mit elastischer Vorspannung an der Kolbenmantelfläche (70) anliegt.

7. Hauptzylinder nach Anspruch 6, **dadurch gekennzeichnet, dass** die Dichtlippe (78) eine derartige Vorspannung hat, dass diese bei einem Unterdruck in der Zylinderkammer (18) ein Durchströmen von Hydraulikmedium von dem Nachlaufraum (84) zur Zylinderkammer (18) durch zumindest partielles Abheben von der Kolbenmantelfläche (70) zulässt.

8. Hauptzylinder nach einem der voranstehenden Ansprüche, **dadurch gekennzeichnet, dass** der Kolben (16) in einer Verschlussstellung mit den Nachlauföffnungen (102) soweit von der Druckausgleichsstellung weg positioniert ist, dass die Nachlauföffnungen (102) von einer Dichtfläche (80) der inneren Dichtlippe (78) abgedeckt sind.

9. Hauptzylinder nach einem der voranstehenden Ansprüche, **dadurch gekennzeichnet, dass** der Kolben (16) in einer Druckstellung soweit in Richtung der Zylinderkammer (18) verschoben ist, dass die Nachlauföffnungen (102) auf einer der Zylinderkammer (18) zugewandten Seite der Dichtlippe (78) stehen und dass insbesondere bei in der Druckstellung stehendem Kolben (16) ein Spalt (140) zwischen einer Innenfläche (64) der Zylinderkammer (18) und der Kolbenmantelfläche (70) vorliegt und eine an das Dichtelement (60) angrenzende Ringkammer (130) der Zylinderkammer (18) von einem volumenvariablen Bereich (138) der Zylinderkammer (18) trennt.

10. Hauptzylinder nach Anspruch 9, **dadurch gekennzeichnet, dass** der Spalt (140) zwischen der Innenfläche (64) der Zylinderkammer (18) und der Kolbenmantelfläche (70) in allen Stellungen des Kolbens (16) zwischen der Druckstellung und der Verschlussstellung minimal ist.

11. Hauptzylinder nach einem der voranstehenden Ansprüche, **dadurch gekennzeichnet, dass** das Dichtelement (60) von einer äußeren Öffnung (152, 30) des Zylindergehäuses (12) in dieses einsetzbar ist, und dass insbesondere das Zylindergehäuse (12) eine sich an die äußere Öffnung (152, 30) anschließende und bis zu einem Nutgrund (68) einer Aufnahmenut (62) reichende Bohrung (150, 180, 26) aufweist, durch welche das Dichtelement (60) einführbar ist.

12. Hauptzylinder nach Anspruch 11, **dadurch gekennzeichnet, dass** die sich an die äußere Öffnung (152, 30) anschließende Bohrung (150, 180, 26) mindestens eine Querschnittsfläche aufweist, welche einer Querschnittsfläche des Nutgrundes (68) entspricht.

13. Hauptzylinder nach einem der Ansprüche 11 oder 12, **dadurch gekennzeichnet, dass** in das Zylindergehäuse (12) ein das Dichtelement (60) fixierender Einsatz (160, 170, 190) einsetzbar ist.

14. Hauptzylinder nach Anspruch 13, **dadurch gekennzeichnet, dass** der Einsatz (160, 170, 190) im in das Zylindergehäuse (12) eingesetzten Zustand eine Nutwand (65, 67) bildet.

## Claims

1. Master cylinder, in particular for a clutch, actuating or brake system of a vehicle, comprising a cylinder housing (12) with a piston bore (14), a piston (16) arranged in the piston bore (14) and having an end side (46) facing a cylinder chamber (18) and at least one afterflow opening (102) leading from a piston skirt surface (70) through a piston wall (104) to the cylinder chamber (18) at a distance from the end side (46), said opening adjoining an afterflow space (84) in a pressure equalization position of the piston (16) so that in the pressure equalization position hydraulic medium can run on into the cylinder chamber (18) in order to equalize the pressure, and an inner sealing element (60) arranged between the housing (12) and the piston (16) in the area of the piston bore (14) and limiting the cylinder chamber (18),
**characterized in that** the sealing element (60) abuts sealingly on a piston skirt surface (70) when the piston (16) is in the pressure equalization position, said piston skirt surface being rotationally symmetric and cylindrical and having an invariable cross section over a length of the piston (16), that the afterflow space (84) is arranged between the sealing element (60) and the piston skirt surface (70) on a side of a sealing lip (78) of the sealing element (60) facing away from the cylinder chamber (18) and that in the pressure equalization position the at least one afterflow opening (102) is arranged so as to be located opposite an inner surface (82) of the sealing element (60) limiting the afterflow space (84).

2. Master cylinder as defined in claim 1, **characterized in that** the sealing element has inner surface areas (88, 90) extending at a distance from the piston skirt surface (70) for the formation of the afterflow space (84), and that the inner surface areas (88, 90), in particular, form a cavity (88) extending around the piston skirt surface (70).

3. Master cylinder as defined in claim 2, **characterized in that** the inner surface areas (88, 90) form overflow channels (90) leading to a side of the sealing element (60) facing away from the cylinder chamber (18).

4. Master cylinder as defined in claim 3, **characterized in that** the overflow channels (90) extend approximately parallel or spirally or helically in relation to a direction of movement of the piston (16).

5. Master cylinder as defined in claim 3 or 4, **characterized in that** the afterflow space (84) lies adjacent to a supply recess (92, 142, 208) located between the piston skirt surface (70) and the piston bore (14).

6. Master cylinder as defined in any one of the preceding claims, **characterized in that** the sealing element (60) has an annular base member (74), that proceeding from the base member (74) a sealing lip (78) located radially inwards extends, in particular, in the direction of the cylinder chamber (18) and that the sealing lip (78), in particular, abuts on the piston skirt surface (70) radially inwards with elastic pretensioning.

7. Master cylinder as defined in claim 6, **characterized in that** the sealing lip (78) has such a pretensioning that it allows hydraulic medium to flow through from the afterflow space (84) to the cylinder chamber (18) by at least partially lifting away from the piston skirt surface (70) when there is underpressure in the cylinder chamber (18).

8. Master cylinder as defined in any one of the preceding claims, **characterized in that** in a closed position the piston (16) is positioned with the afterflow openings (102) at such a distance from the pressure equalization position that the afterflow openings (102) are covered by a sealing surface (80) of the inner sealing lip (78).

9. Master cylinder as defined in any one of the preceding claims, **characterized in that** in a pressure position the piston (16) is displaced to such an extent in the direction of the cylinder chamber (18) that the afterflow openings (102) are located on a side of the sealing lip (78) facing the cylinder chamber (18) and that in particular when the piston (16) is in the pressure position a gap (140) is present between an inner surface (64) of the cylinder chamber (18) and the piston skirt surface (70) and separates an annular chamber (130) of the cylinder chamber (18) adjoining the sealing element (60) from a variable volume area (138) of the cylinder chamber (18).

10. Master cylinder as defined in claim 9, **characterized in that** the gap (140) between the inner surface (64) of the cylinder chamber (18) and the piston skirt surface (70) is minimal in all the positions of the piston (16) between the pressure position and the closed position.

11. Master cylinder as defined in any one of the preceding claims, **characterized in that** the sealing element (60) is insertable into the cylinder housing (12) from an outer opening (152, 30) thereof and that the cylinder housing (12), in particular, has a bore (150, 180, 26) lying adjacent to the outer opening (152, 30) and reaching as far as a base (68) of a receiving groove (62), the sealing element (60) being insertable through said bore.

12. Master cylinder as defined in claim 11, **characterized in that** the bore (150, 180, 26) lying adjacent to the outer opening (152, 30) has at least one cross sectional surface corresponding to a cross sectional surface of the base (68) of the groove.

13. Master cylinder as defined in one of claims 11 or 12, **characterized in that** an insert (160, 170, 190) fixing the sealing element (60) in place is insertable into the cylinder housing (12).

14. Master cylinder as defined in claim 13, **characterized in that** the insert (160, 170, 190) forms a groove wall (65, 67) when it is inserted into the cylinder housing (12).

## Revendications

1. Maître-cylindre, en particulier pour un système d'embrayage, d'actionnement ou de frein d'un véhicule, comprenant un corps de cylindre (12) avec un alésage de piston (14), un piston (16) disposé dans l'alésage de piston (14) avec un côté frontal (46) tourné vers une chambre de cylindre (18) et avec au moins une ouverture d'écoulement (102) menant depuis une surface latérale de piston (70) jusqu'à la chambre de cylindre (18) à travers une paroi de piston (104) à distance du côté frontal (46), qui jouxte une chambre d'écoulement (84) dans une position d'équilibrage de pression du piston (16), de telle manière que dans la position d'équilibrage de pression un fluide hydraulique puisse s'écouler dans la chambre de cylindre (18) pour l'équilibrage de la pression, et un élément d'étanchéité intérieur (60) disposé entre le corps (12) et le piston (16) dans la région de l'alésage de piston (14) et limitant la chambre de cylindre (18), **caractérisé en ce que** l'élément d'étanchéité (60) est appliqué de façon étanche, lorsque le piston (16) se trouve dans la position d'équilibrage de pression, sur une surface latérale de piston (70) à symétrie de rotation et cylindrique de section transversale invariable sur une longueur du piston (16), **en ce que** la chambre d'écoulement (84) est agencée entre l'élément d'étanchéité (60) et la surface latérale de piston (70) sur un côté d'une lèvre d'étanchéité (78) détourné de la chambre de cylindre (18), et **en ce que** ladite au moins une ouverture d'écoulement (102) est disposée, dans la position d'équilibrage de pression, en face d'une face intérieure (82) de l'élément d'étanchéité (60) limitant la chambre d'écoulement (84).

2. Maître-cylindre selon la revendication 1, **caractérisé en ce que** l'élément d'étanchéité présente, pour la formation de la chambre d'écoulement (84), des régions de faces intérieures (88, 90) s'étendant à distance de la surface latérale de piston (70), et en particulier **en ce que** les régions de faces intérieures (88, 90) forment un creux périphérique (88) ceinturant la surface latérale de piston (70).

3. Maître-cylindre selon la revendication 2, **caractérisé en ce que** les régions de faces intérieures (88, 90) forment des canaux de débordement (90) menant à un côté de l'élément d'étanchéité (60) détourné de la chambre de cylindre (18).

4. Maître-cylindre selon la revendication 3, **caractérisé en ce que** les canaux de débordement (90) s'étendent environ parallèlement ou en forme de spirale ou en forme d'hélice par rapport à une direction de mouvement du piston (16).

5. Maître-cylindre selon la revendication 3 ou 4, **caractérisé en ce que** la chambre d'écoulement (84) se raccorde à un évidement d'arrivée (92, 142, 208) situé entre la surface latérale de piston (70) et l'alésage de piston (14).

6. Maître-cylindre selon l'une quelconque des revendications précédentes, **caractérisé en ce que** l'élément d'étanchéité (60) présente un corps de base annulaire (74), en particulier **en ce qu'**une lèvre d'étanchéité située radialement à l'intérieur (78) s'étend à partir du corps de base (74) en direction de la chambre de cylindre (18), et en particulier **en ce que** la lèvre d'étanchéité (78) s'applique radialement vers l'intérieur avec une précontrainte élastique sur la surface latérale de piston (70).

7. Maître-cylindre selon la revendication 6, **caractérisé en ce que** la lèvre d'étanchéité (78) présente une précontrainte telle que celle-ci, en présence d'une dépression dans la chambre de cylindre (18), permette un écoulement de fluide hydraulique de la chambre d'écoulement (84) à la chambre de cylindre (18) par soulèvement au moins partiel à partir de la paroi latérale de piston (70).

8. Maître-cylindre selon l'une quelconque des revendications précédentes, **caractérisé en ce que** le piston (16) est positionné, dans une position de fermeture, avec les ouvertures d'écoulement (102) tellement éloignées de la position d'équilibrage de pression que les ouvertures d'écoulement (102) sont recouvertes par une face d'étanchéité (80) de la lèvre d'étanchéité intérieure (78).

9. Maître-cylindre selon l'une quelconque des revendications précédentes, **caractérisé en ce que** le piston (16) dans une position de pression est déplacé tellement loin en direction de la chambre de cylindre (18), que les ouvertures d'écoulement (102) sont situées sur un côté de la lèvre d'étanchéité (78) tourné vers la chambre de cylindre (18) et **en ce que**, en particulier lorsque le piston (16) se trouve dans la position de pression, une fente (140) se trouve entre une face intérieure (64) de la chambre de cylindre (18) et la surface latérale de piston (70) et sépare une chambre annulaire (130) de la chambre de cylindre (18) adjacente à l'élément d'étanchéité (60) d'une région à volume variable (138) de la chambre de cylindre (18).

10. Maître-cylindre selon la revendication 9, **caractérisé en ce que** la fente (140) entre la face intérieure (64) de la chambre de cylindre (18) et la surface latérale de piston (70) est minimale dans toutes les positions du piston (16) entre la position de pression et la position de fermeture.

11. Maître-cylindre selon l'une quelconque des revendications précédentes, **caractérisé en ce que** l'élément d'étanchéité (60) peut être introduit dans le corps de cylindre (12) à partir d'une ouverture extérieure (152, 30) de celui-ci, et en particulier **en ce que** le corps de cylindre (12) présente un alésage (150, 180, 26) se raccordant à l'ouverture extérieure (152, 30) et s'étendant jusqu'à un fond de rainure (68) d'une rainure de réception (62), à travers lequel l'élément d'étanchéité (60) peut être introduit.

12. Maître-cylindre selon la revendication 11, **caractérisé en ce que** l'alésage (150, 180, 26) se raccordant à l'ouverture extérieure (152, 30) présente au moins une surface de section transversale, qui correspond à une surface de section transversale du fond de rainure (68).

13. Maître-cylindre selon l'une quelconque des revendications 11 ou 12, **caractérisé en ce qu'**un insert (160, 170, 190) fixant l'élément d'étanchéité (60) peut être introduit dans le corps de cylindre (12).

14. Maître-cylindre selon la revendication 13, **caractérisé en ce que** l'insert (160, 170, 190) forme, dans l'état introduit dans le corps de cylindre (12), une paroi de rainure (65, 67).
